# EUROPÄISCHE PATENTSCHRIFT

(11) **EP 0 637 688 B1**
(45) Veröffentlichungstag und Bekanntmachung des Hinweises auf die Patenterteilung: **07.01.1999**
(21) Anmeldenummer: 93810556.6
(22) Anmeldetag: 06.08.1993
(51) Int. Cl.: F03B 3/18, F03B 11/00, F03B 11/02

(54) **Teillaststellventil für axial oder halbaxiale beaufschlagte Wasserturbine**
Partial load control valve for axial or mixed flow waterturbine
Soupape de réglage de charge partielle pour turbine hydraulique à écoulement axial ou mixte

(43) Veröffentlichungstag der Anmeldung: 08.02.1995
(73) Patentinhaber: SULZER-ESCHER WYSS AG, CH-8023 Zürich (CH)
(72) Erfinder: Erlach, Josef, D-88213 Ravensburg (DE)
(74) Vertreter: Trieblnig, Adolf

(56) Entgegenhaltungen:
- CH-A- 294 121
- CH-A- 324 495
- CH-A- 328 557
- DE-C- 12 314
- DE-C- 661 672
- FR-A- 1 076 276
- GB-A- 758 675
- US-A- 2 828 603

## Beschreibung

Die Erfindung handelt von einer axialen oder halbaxialen Turbine mit einem Laufrad, mit einem rotationssymmetrischen Wasserzuführring, dessen Krümmung in Schnittebenen, welche die Turbinenachse enthalten, mit zunehmender Annäherung an das Laufrad sich an die Richtung der Turbinenachse angleicht, wobei der Wasserzuführring eine innere Begrenzungsfläche zur Laufradnabe und eine äussere Begrenzungsfläche zur Laufradperipherie aufweist, und wobei mehrere konzentrische Ringkörper einen Teil der Kontur der inneren Begrenzungsfläche bilden und in der Richtung der Turbinenachse verstellbar sind.

Wasserturbinen im Niederdruckbereich nach dem Prinzip der Kaplanturbine werden häufig mit einem Leit- und Abschlussapparat versehen, um über einen grossen Regelbereich günstige Wirkungsgrade zu erzielen:

Bei doppelt regulierten Kaplanturbinen wird ein Laufrad mit verstellbaren Schaufeln zusätzlich über ein verstellbares Leitschaufelgitter beaufschlagt. Das Abschlussorgan ist der Leitapparat, der - wenn er tropfdicht sein muss - eine sehr teure Konstruktion wird. Die Patentschrift CH 328 557 zeigt einen verstellbaren Leitapparat mit einer angebauten Ringschütze als Abschlussorgan. Die Ringschütze hat dabei den Vorteil, dass die Dichtwirkung leichter und auch bei grösserem Gefälle erreicht wird. Die doppelt regulierten Kaplanturbinen erreichen gute Wirkungsgrade über einen grossen Lastbereich, sind aber dafür in ihrem Aufbau wesentlich komplizierter und teurer als einfach regulierte Kaplanturbinen.

Bei einfach regulierten Kaplanturbinen ist entweder wie bei der Propellerturbine mit feststehenden Schaufeln der Leitapparat, der auch das Abschlussorgan bildet, regulierbar oder das Laufrad selbst bei feststehendem Leitapparat, der jedoch eine Einlaufschütze als Abschlussorgan aufweisen sollte, über seine verstellbaren Laufradschaufeln regulierbar.

In der FR-B-1 076 276 sind Kaplanturbinen gezeigt, bei denen in Strömungsrichtung vor dem Leitapparat jeweils ein Abschlussorgan in Form einer teleskopartig zusammengesetzten Ringschütze vorgesehen ist. Die DE-B-12 314 zeigt Turbinenräder, die mit einem partiellen Leitapparat teilbeaufschlagt sind. Um beim Verlassen des Leitapparates zwischen den Laufradschaufeln keinen Unterdruck entstehen zu lassen, schliesst an den Leitapparat in Umlaufrichtung eine Luftkammer an, die ein Nachfliessen von Luft gestattet.

Aufgabe der Erfindung ist es, weitere Regulierelemente zu entwickeln, die z.B. die Verstellbarkeit von Leitschaufeln erübrigen.

Diese Aufgabe wird mit den Kennzeichen von Anspruch 1 gelöst, indem mehrere konzentrische Ringkörper die Kontur der inneren Begrenzungsfläche bilden, welche in der Richtung der Turbinenachse zum Laufrad hin verstellbar sind, um durch Verschieben der Kontur innerhalb des grössten Schaufeldurchmessers bessere Teillastwirkungsgrade zu erzeugen.

Ein Vorteil dieser Anordnung besteht darin, dass sie aus wenigen bewegten Teilen besteht, die wegen ihrer Ringform radiale Strömungskräfte in sich ausgleichen. Ein weiterer Vorteil besteht in der Mengenregulierung bei annähernd gleichen Geschwindigkeitsdreiecken, indem die Kanalbreite und die Beaufschlagungsbreite am Laufrad variiert werden. Es kann somit ein festes Leitschaufelgitter verwendet werden und es kann auf verstellbare Laufradschaufeln verzichtet werden, ohne zuviel Punkte bei den Teillastwirkungsgraden zu verlieren.

Weitere vorteilhafte Ausführungen ergeben sich aus den Unteransprüchen 2 bis 9. Beginnend mit dem innersten der Ringkörper werden alle nach aussen anschliessenden und axial beweglichen Ringkörper, welche an der inneren Begrenzungsfläche des Wasserzuführringes beteiligt sind, im Verbund axial zugestellt, um den Querschnitt des Wasserzuführringes zu verringern. Wenn die dem Laufrad zugewandte Kante des innersten axial beweglichen Ringkörpers bis zu einem Minimalabstand zum Laufrad in den früheren Wasserzuführring eingetaucht ist, entsteht eine Abrisskante für die Strömung und eine Verringerung des Kanalquerschnitts. Die mit einem Drall versehene Strömung wird in ihrer Ablösung durch ein Luftpolster an der Nabe unterstützt, welches von ausserhalb anspeisbar ist, und das Laufrad wird auf seiner Innenseite nicht mehr beaufschlagt. Mit der axialen Verstellung der Kontur wird gleichzeitig die Menge verändert. Wenn bei zunehmendem Teillastbetrieb der innerste Ring seinen Minimalabstand zum Laufrad erreicht hat, übernimmt der nächstfolgende äussere Ring die Regelung der Menge, indem seine Abrisskante und sein Abstand zum Laufrad den Querschnitt des Wasserzuführringes bestimmen. Um die Ringkörper mit der nach aussen anschliessenden Kontur der restlichen Ringkörper nacheinander zu aktivieren wäre theoretisch eine Art Kaskadensteuerung notwendig. Durch geschickte Anordnung eines Stellgliedes am äusseren Ringkörper und durch Verspannen der Ringkörper gegeneinander in axialer Richtung genügt ein Stellglied um alle Ringkörper mit der nach aussen anschliessenden Kontur nacheinander in ihrem zulässigen Verstellbereich zu bewegen. Bei vertikaler Anordnung der Achse können die Ringkörper unter Schwerkraft auf dem jeweils nächstäusseren Ringkörper zu Regelzwecken aufliegen, solange sie nicht nach dem Durchfahren ihres axialen Zustellbereiches durch eine Wegbegrenzung am nächstinneren Ringkörper daran gehindert werden. Bei Verwendung eines starren Leitschaufelgitters vor dem Wasserzuführring kann eine Ringschütze, die aus dem äussersten der beweglichen Ringkörper gebildet wird, die Funktion des Abschlussorgans übernehmen, wobei der gleiche Stellmechanismus - allerdings mit grösserem Stellweg - für alle Ringkörper wirksam ist. Bei vertikaler Anordnung der Turbinenachse ist es möglich, mit einem Zylinder als Stellglied und mit drei Aufhängeseilen, welche umgelenkt werden, gegen das Gewicht der Ringkörper eine Höhenverstellung vorzunehmen. Das heisst, bei vertikaler Anordnung ergibt sich wegen der Ausnutzung der Schwerkraft eine grosse Schliesssicherheit für den Verstell- und Abschlussmechanismus. Die Betriebssicherheit wird erhöht und der Gleichlauf wird auf einfache Weise verwirklicht.

Ein weiterer Vorteil besteht in einer strikt durchführbaren Trennung von ölbenetzten und von wasserbenetzten Räumen, was die Umweltverträglichkeit erhöht.

Sobald ein Ringkörper seine Kontur gegenüber dem nächstinneren Ringkörper in Richtung Laufrad verschiebt und damit die Regelung der Menge übernimmt, kann auf seiner Innenseite Luft eingespiesen werden, die die Ablösung der Zulaufstromes unterstützt.

Im folgenden wird die Erfindung anhand von Ausführungsbeispielen näher erläutert. Es zeigen:
- Fig. 1: schematisch einen Längsschnitt durch eine Turbine, welche bei niedriger Teillast betrieben wird;
- Fig. 2: schematisch einen Längsschnitt durch die in Fig. 1 gezeigte Turbine, wenn sie mit einer grösseren Menge als der 100 %-Auslegung entsprechend betrieben wird;
- Fig. 3: einen abgesetzten Querschnitt durch eine Turbine gemäss Fig. 2;
- Fig. 4: schematisch einen vergrösserten Ausschnitt aus Fig. 1 und
- Fig. 5: schematisch von oben gesehen die Ansicht einer Aufziehvorrichtung zur Regelung der Höhe der Ringkörper über einem Laufrad mit vertikaler Achse.

In den Figuren ist bei einer axialen oder halbaxialen Turbine mit einem rotationssymmetrischen Wasserzuführring die Krümmung desselben in Schnittebenen durch die Turbinenachse so gehalten, dass sie sich mit zunehmender Annäherung an das Laufrad an die Richtung der Turbinenachse angleicht. Die Kontur der inneren Begrenzungsfläche des Wasserzuführringes wird aus mehreren ineinandergelagerten konzentrischen Ringkörpern gebildet, wobei die Ringkörper zum Laufrad hin verschiebbar sind, um durch Zustellen der Kontur den Querschnitt des Wasserzuführringes zu verkleinern und bessere Teillastwirkungsgrade zu erzeugen. Bei extremer Teillast wird dabei das Laufrad nur noch ringförmig im äusseren Bereich beaufschlagt, während im inneren Bereich ein Luftpolster erzeugt wird, um die Ablösung an der unterbrochenen Kontur zu verbessern.

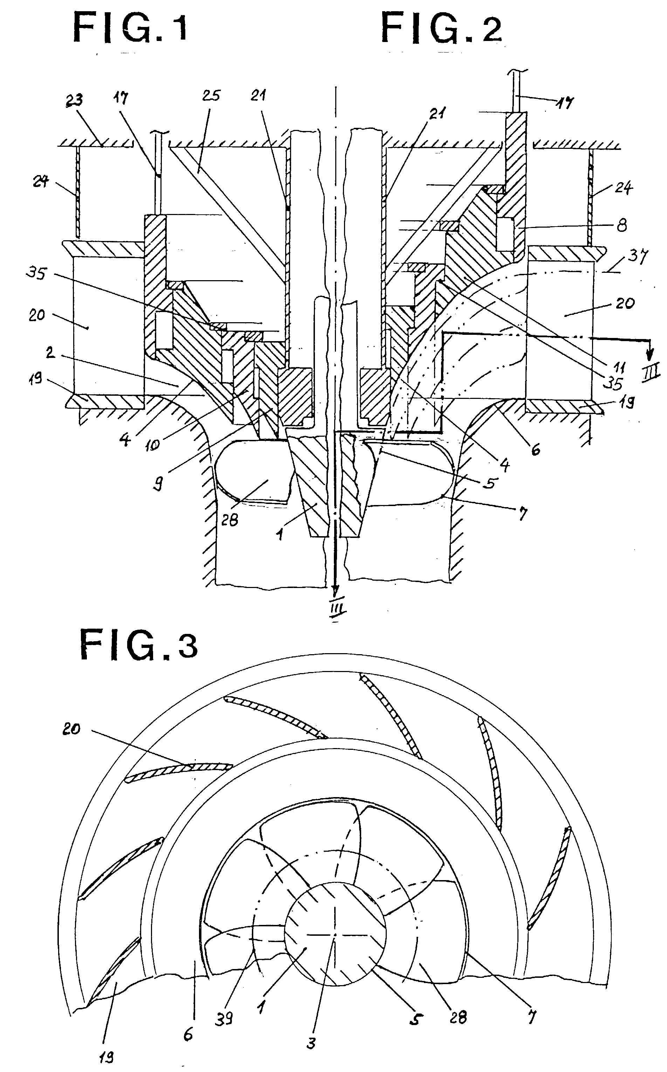

In Fig. 1 und 2 ist die Vertikalaufstellung einer Propellerturbine mit Laufrad 1 und Schaufeln 28 gezeigt. Die Laufradführung erfolgt über ein Stützrohr 21, welches mit einem Gehäuse 23 verbunden und über Stützen 25 verstärkt ist. Das Wasser strömt über einen ringförmigen Leitapparat 19 mit starren Leitschaufeln 20 annähernd horizontal in einen Wasserzuführring 2 ein und wird dort über eine äussere Begrenzungsfläche 6 und eine innere Begrenzungsfläche 4 in die Richtung der Turbinenachse 3 umgelenkt. Der Leitapparat 19 ist über eine Trennwand 24 mit dem Gehäuse 23 verbunden.

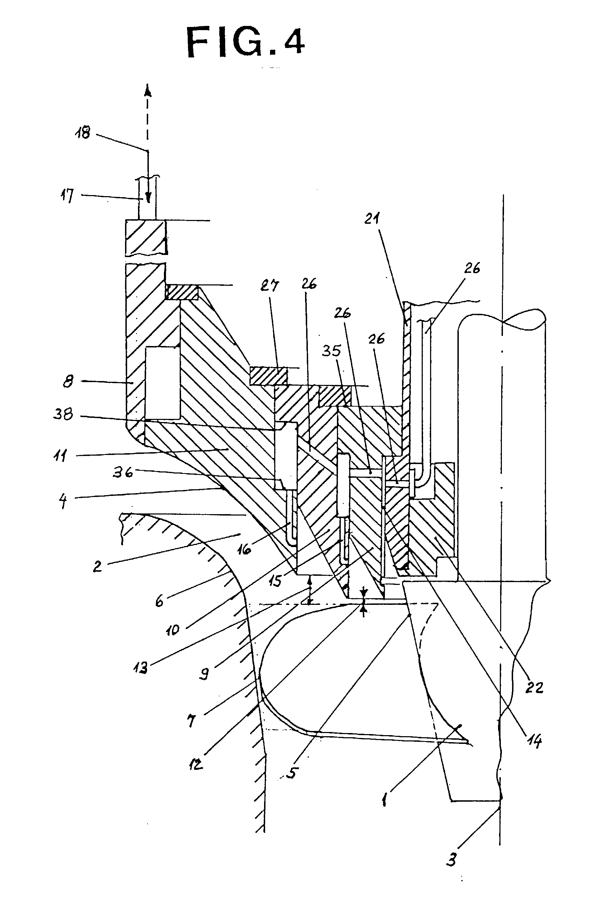

Die Kontur der inneren Begrenzungsfläche 4 wird aus mehreren axial verschiebbaren Ringkörpern 9, 10, 11 gebildet, deren Zustellbewegung zum Laufrad hin so gekoppelt ist, dass ein Ringkörper im Verbund mit den aussen an ihn anschliessenden Ringkörpern bis zu einem für ihn typischen Minimalabstand 12, 13 zum Laufrad 1 zustellbar ist, während die aussen an ihn anschliessenden Ringkörper sich relativ zu ihm weiter in Zustellrichtung bewegen können. Gemäss Fig. 4 wird ein Ringkörper durch einen Haltering 27 der auf einer Wegbegrenzung 35 des nächstinneren Ringkörpers aufsitzt, in seiner Zustellbewegung begrenzt, während er zur Rückstellung vom nächstäusseren Ringkörper mitgenommen wird, wenn ihn dieser mit einem Anschlag 36 an seiner Schulter 38 erreicht, wobei gleichzeitig die Begrenzungsflächen 4 zusammenfallen. Die Regelung der Zustellbewegung erfolgt am äussersten Ringkörper in axialer Richtung während die innen anschliessenden Ringkörper unter Schwerkraft entweder direkt und indirekt am äussersten Ringkörper abgestützt sind oder auf der Wegbegrenzung 35 des nächstinneren Ringkörpers aufliegen. Es ist ohne weiteres denkbar, zur Unterstützung der Schwerkraft oder bei horizontaler Aufstellung anstatt der Schwerkraft Druckpolster an jedem Ringkörper angreifen zu lassen.

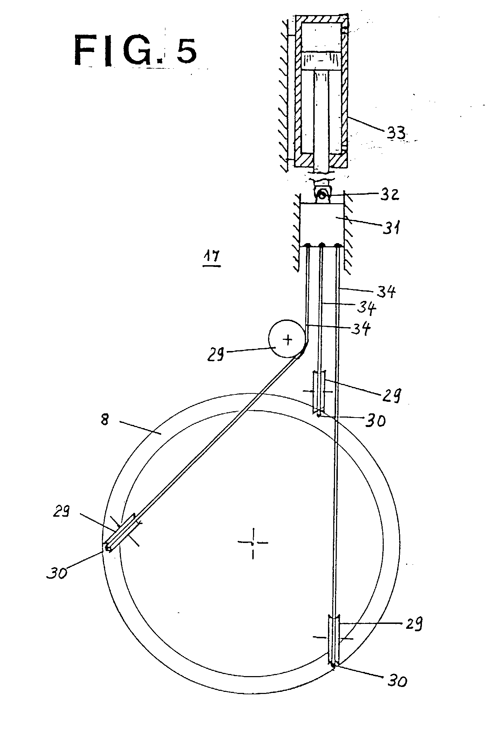

Im vorliegenden Beispiel ist der äusserste Ringkörper als Ringschütze 8 ausgeführt, deren Schliess- und Oeffnungsbewegung mit dem gleichen Verstellelement 17 wie die Regelbewegung der restlichen Ringkörper vorgenommen wird. In Fig. 5 ist eine Aufziehvorrichtung 17 gezeigt, bei der drei Drahtseile 34 an drei Angriffspunkten 30 der Ringschütze 8 befestigt sind und über Umlenkrollen 29 und über ein Führungsstück 31 mit Kupplung 32 an einem Stellzylinder 33 aufgehängt sind.

In Fig. 2 ist die innere Begrenzungsfläche 4 in ihrem grössten Abstand zur äusseren Begrenzungsfläche 6 gezeigt, welcher grösser als die 100 %-Lage 37 mit 100 % Durchflussmenge ist, um bis zu diesem Betrag regeln zu können. Bei zunehmender Teillast wird der Begrenzungsquerschnitt zwischen innerer Begrenzungsfläche 4 und äusserer Begrenzungsfläche 6 zunehmend verringert bis eine Stellung gemäss Fig. 1 erreicht ist. Während der Zustellung zum Laufrad erreicht von innen her eine Ringspitze nach der anderen ihren Minimalabstand 12, 13 zum Laufrad 1 und der nächstäussere Ringkörper bildet mit seiner Ringspitze eine Abrisskante an der inneren Begrenzungsfläche 4. Der einfallende Wasserstrom wird dabei mehr und mehr in Form eines ringförmigen sich verkleinernden Querschnitts zur Laufradperipherie verschoben, während sich auf der Innenseite zur Laufradnabe 5 hin ein Luftpolster bildet, welches über Zuleitungen 26 am Lager 22 vorbei so anspeisbar ist, dass jede neu entstehende Abreisskante auf ihrer Rückseite über einen Belüftungskanal 14, 15, 16 mit Luft versorgt ist.

Fig. 3 zeigt den starren Leitapparat und den daran anschliessenden Wasserzuführring 2 mit seiner äusseren Begrenzungsfläche 6. Die Lage einer Spitze 39 eines Ringkörpers, welche im Teillastbetrieb als momentane Ablösekante funktioniert, ist darin angedeutet. Dabei ist ersichtlich, dass sich die Geschwindigkeitsdreiecke an der Peripherie des Laufrades wegen der unveränderten Geometrie zwischen Leitapparat 19 und Laufrad 1 kaum verändern.

## Patentansprüche

1. Axiale ober halbaxiale Turbine mit einem Laufrad (1) mit einem rotationssymmetrischen Wasserzuführring (2), dessen Krümmung in Schnittebenen, welche die Turbinenachse (3) enthalten, mit zunehmender Annäherung an das Laufrad (1) sich an die Richtung der Turbinenachse (3) angleicht, wobei der Wasserzuführring (2) eine innere Begrenzungsfläche (4) zur Laufradnabe (5) und eine äussere Begrenzungsfläche (6) zur Laufradperipherie (7) aufweist und wobei mehrere konzentrische Ringkörper (9, 10, 11) einen Teil der Kontur der inneren Begrenzungsfläche (4) bilden und in der Richtung der Turbinenachse (3) verstellbar sind, dadurch gekennzeichnet, dass konzentrische Ringkörper (9, 10, 11) unmittelbar dem Laufrad (1) vorgelagert sind und mit ihrer Kontur bis auf einen Minimalabstand (12, 13) an die Schaufeln des Laufrades (1) axial zustellbar sind und dass mindestens einer der Ringkörper (9, 10, 11) mit dem kleinsten Durchmesser seiner Kontur innerhalb des grössten Schaufeldurchmessers (7) liegt, um durch Verschieben der Kontur bessere Teillastwirkungsgrade zu erzeugen.

2. Turbine nach Anspruch 1, dadurch gekennzeichnet, dass - beginnend mit dem innersten Ringkörper (9) - jeder Ringkörper (9, 10, 11) im Verbund mit den nach aussen an ihn anschliessenden Ringkörpern bis auf den für ihn typischen Minimalabstand (12, 13) zum Laufrad (1) axial zustellbar ist.

3. Turbine nach Anspruch 2, dadurch gekennzeichnet, dass ein axial bewegter Ringkörper (9, 10, 11) jeweils einen axialen Stellbereich mit axialen Wegbegrenzungen (35) zum nächstinneren Ringkörper aufweist, wobei der für ihn typische Minimalabstand (12, 13) zum Laufrad erst dann erreichbar ist, wenn die innen vorgelagerten Ringkörper ihren Minimalabstand zum Laufrad bereits erreicht haben.

4. Turbine nach Anspruch 2 oder 3, dadurch gekennzeichnet, dass ein Packet von axial zueinander beweglichen Ringkörpern (9, 10, 11) über ein Stellglied (33) verstellbar ist, welches am äussersten Ringkörper (8) angreift.

5. Turbine nach einem der Ansprüche 1 bis 4, dadurch gekennzeichnet, dass der äusserste Ringkörper als Ringschütze (8) ausgebildet ist, mit welcher die Wasserzufuhr unterbindbar ist.

6. Turbine nach einem der Ansprüche 2 bis 5, dadurch gekennzeichnet, dass vor dem Erreichen des Minimalabstandes (12, 13) eines Ringkörpers (9, 10, 11) auf dessen Innenseite ein Belüftungskanal (14, 15, 16) geöffnet ist, durch welchen Luft nachfliessen kann, um die Ablösung des Zulaufstromes bei Teillast zu verbessern.

7. Turbine nach einem der Ansprüche 1 bis 6, dadurch gekennzeichnet, dass die Ringkörper (9, 10, 11) gegenseitig in axialer Richtung geführt sind und unter Schwerkraft durch Nachlassen einer Aufziehvorrichtung (17) zum Laufrad (1) zustellbar sind.

8. Turbine nach einem der Ansprüche 1 bis 6, dadurch gekennzeichnet, dass die Ringkörper (9, 10, 11) im Rahmen ihrer Axialbewegung auf Schraubenlinien gegenseitig geführt sind.

9. Turbine nach einem der Ansprüche 1 bis 8, dadurch gekennzeichnet, dass dem Wasserzuführring (2) ein starres Leitschaufelgitter (19) mit Leitschaufeln (20) vorgelagert ist.

## Claims

1. An axial or semi-axial turbine having a blade wheel (1) with a rotationally symmetrical water supply ring (2), the curvature of which in cutting planes, which contain the turbine axis (3), with increasing proximity to the blade wheel (1) matches up with the direction of the turbine axis (3), wherein the water supply ring (2) comprises an inner limiting face (4) to the rotor disk centre (5) and an outer limiting face (6) to the blade wheel periphery (7) and wherein several concentric annular members (9, 10, 11) form a part of the contour of the inner limiting face (4) and are adjustable in the direction aid the turbine axis (3),
**characterised in that** concentric annular members (9, 10, 11) are mounted directly in front of the blade wheel (1) and with their contours can be delivered to the blades of the blade wheel (1) right up to a minimum spacing (12, 13),
and in that at least one of the annular members (9, 10 , 11) having the smallest diameter lies inside the blade diameter (7) to produce better part-load efficiency by moving the contour.

2. A turbine according to Claim 1,
**characterised in that** each annular member (9, 10, 11) - beginning with the innermost annular member (9) - can be axially delivered to the blade wheel (1) in combination with the annular members outwardly following it right to the minimum distance (12, 13) typical for it.

3. A turbine according to Claim 2,
**characterised in that** an axially moved annular member (9, 10, 11) in each case comprises an axial adjustment range having axial limit stops (35) for the next innermost annular member, with it being possible to achieve the minimum spacing (12, 13) typical for it to the blade wheel only if annular members mounted inwardly in front of it have already achieved their minimum spacing (with respect) to the blade wheel.

4. A turbine according to Claim 2 or 3,
**characterised in that** a packet of annular members (9, 10, 11) which can move axially towards one another can be adjusted via a control element (33), which acts on the outermost annular member (8).

5. A turbine according to one of Claims 1 to 4,
**characterised in that** the outermost annular member is constructed as an annular sliding valve (8) with which the water supply can be prevented.

6. A turbine according to one of Claims 2 to 5,
**characterised in that** before achieving the minimum spacing (12, 13) of an annular member (9, 10, 11), on its inside a ventilation duct (14, 15, 16) is opened, through which air can continue flowing in order to improve the separation of the inlet flow in the event of part-load.

7. A turbine according to one of Claims 1 to 6,
**characterised in that** the annular members (9, 10, 11) are mutually guided in the axial direction and under gravitational force can be delivered to the blade wheel (1) by slackening a hoisting device (17).

8. A turbine according to one of Claims 1 to 6,
**characterised in that** the annular members (9, 10, 11) are mutually guided within the limits of their axial movement on helical lines.

9. A turbine according to one of Claims 1 to 8,
**characterised in that** a rigid guide blade grid (19) with guide blades (20) is mounted in front of the water supply ring (2).

## Revendications

1. Turbine axiale ou semi-axiale avec une roue à auges (1) avec une bague d'amenée d'eau symétrique en rotation (2) dont la courbure s'adapte dans des plans de coupe qui contiennent l'axe (3) de la turbine, avec une approche croissante à la roue à auges (1) en direction de l'axe de la turbine (3), où la bague d'amenée d'eau (2) présente une surface de délimitation intérieure (4) vers le moyeu de la roue à auges (5) et une surface de délimitation extérieure (6) vers la périphérie de roue à auges (7) et où plusieurs corps annulaires concentriques (9, 10, 11) forment une partie du contour de la surface de délimitation intérieure (4) et sont réglables en direction de l'axe de la turbine (3), caractérisée en ce que des corps annulaires concentriques (9, 10, 11) sont disposés directement en amont de la roue à auges (1) et peuvent être approchés par leur contour jusqu'à un écart minimal (12, 13) aux auges de la roue (1) axialement et en ce qu'au moins l'un des corps annulaires (9, 10, 11) avec le plus petit diamètre de son contour se situe à l'intérieur du plus grand diamètre d'auge (7) pour produire, par un déplacement du contour, de meilleurs rendements sous charge partielle.

2. Turbine selon la revendication 1, caractérisée en ce que, en commençant par le corps annulaire le plus intérieur (9), chaque corps annulaire (9, 10, 11) conjointement avec les corps annulaires qui lui font suite vers l'extérieur, est rapprochable axialement jusqu'à l'écart minimal (12, 13) typique pour lui vers l'auge (1).

3. Turbine selon la revendication 2, caractérisée en ce qu'un corps annulaire (9, 10, 11) déplacé axialement présente respectivement une zone de positionnement axiale avec des délimitations de trajet axiales (35) vers le prochain corps annulaire intérieur, où l'écart minimal (12, 13) typique pour lui vers la roue à auges est atteint seulement lorsque les corps annulaires disposés devant à l'intérieur ont déjà atteint leur écart minimal relativement à la roue à auges.

4. Turbine selon la revendication 2 ou 3, caractérisée en ce qu'un paquet de corps annulaires (9, 10, 11) déplaçables axialement les uns vers les autres est déplaçable par un organe de positionnement (33) qui vient contre le corps annulaire le plus extérieur (8).

5. Turbine selon l'une des revendications 1 à 4, caractérisée en ce que le corps annulaire le plus extérieur est réalisé sous forme de protection annulaire (8) par laquelle l'amenée d'eau peut être arrêtée.

6. Turbine selon l'une des revendications 2 à 5, caractérisée en ce que, avant l'atteinte de l'écart minimal (12, 13) d'un corps annulaire (9, 10, 11), sur le côté intérieur de celui-ci, un canal d'aération (14, 15, 16) est ouvert à travers lequel l'air peut circuler encore pour améliorer la séparation de l'écoulement affluant en cas de charge partielle.

7. Turbine selon l'une des revendications 1 à 6, caractérisée en ce que les corps annulaires (9, 10, 11) sont guidés mutuellement dans la direction axiale et sont rapprochables à la roue à auges (1) sous l'effet de la gravité en relâchant un dispositif d'élévation (17).

8. Turbine selon l'une des revendications 1 à 6, caractérisée en ce que les corps annulaires (9, 10, 11), dans le cadre de leur déplacement axial, sont guidés mutuellement sur des hélices.

9. Turbine selon l'une des revendications 1 à 8, caractérisée en ce qu'il est logé en amont de la bague d'amenée d'eau (2) une grille rigide d'auges directrices (19) avec des auges directrices (20).
